# EUROPEAN PATENT SPECIFICATION

(11) **EP 3 569 435 B1**
(45) Date of publication and mention of the grant of the patent: **05.01.2022**
(21) Application number: 18172182.0
(22) Date of filing: 14.05.2018
(51) Int. Cl.: B60K 15/04, G01F 23/00

(54) **FUEL TANK CAP**
KRAFTSTOFFTANKDECKEL
CAPUCHON DE RÉSERVOIR DE CARBURANT

(43) Date of publication of application: 20.11.2019
(73) Proprietor: CEV LAB S.r.l. con unico socio, 20020 Lainate (MI) (IT)
(72) Inventor: BRUNO, Renato, 80128 NAPOLI (IT)
(74) Representative: Gagliardelli, Fabrizio

(56) References cited:
- EP-A1- 1 920 965
- DE-A1-102017 002 856
- DE-U1-202006 018 622
- US-B1- 9 080 529
- US-B1- 9 533 568
- US-B2- 7 053 782

## Description

The object of the present invention is a fuel tank cap that incorporates a level sensor.

The invention refers particularly but not exclusively to fuel tank caps for motorcycles, caravans, current generators, etc.

In detail, the invention has been devised mainly for motorcycle fuel tank caps that are of the "hands-free" or "keyless" type.

Currently, road motorcycles are equipped with various electronic control devices that are connected to a central control unit located on board the vehicle.

Some of these devices are associated with the fuel tank.

For example, there are known hands-free caps for the fuel tanks of motorcycles and they are provided with internal control logic which makes it possible to unlock or lock the cap lock without having to insert a key in the keyhole and thus without having to "use hands".

In detail, this control logic is connected to an antenna which is capable of transmitting and receiving signals from a transponder which is supplied to the user.

In this manner, when the user approaches the motorcycle, the cap unlocks automatically, whereas when the user moves away from it, the cap lock locks.

There are also known fuel tanks that are equipped with electronic level sensors to measure the remaining amount of fuel and to transmit a level signal to the control unit, which then informs the driver by means of an indicator provided on the dashboard.

These level sensors are also equipped with their own control logic, which is contained in a seat provided in the tank for this purpose.

The presence of this seat constitutes an encumbrance and a complication in the design and realization of the tanks, with which the manufacturer is burdened.

Moreover, the level sensors of the known type are equipped with a rod-shaped, rectilinear detection element that must be located within the internal volume of the tanks, said internal volume being intended for containing the fuel.

It is known that this volume is irregular in its geometry, which affects the position and angle with which the detection rod of the sensor is arranged in the tank.

This circumstance constitutes a restriction as to the position in the tank in which the above-mentioned seat for the control logic of the level sensor can be located.

US9080529 discloses a fuel management system that permits an accounting of fuel consumption. The system/ comprises a fuel level sensor, a fuel level sensor transponder and a fuel accounting system. The fuel level sensor determines the contents of a fuel tank, and this information is reported via the fuel sensor transponder to said fuel accounting system that tracks the fuel consumption provides billing information based on the detected fuel consumption.

DE102017002856 relates to a closure cap for an equalizing reservoir of a motor vehicle cooling arrangement. The closure cap includes a cap body and a fill level sensor arranged on the cap body. The fill level sensor enables the fill level of the coolant inside the equalizing reservoir to be measured. The cap body may be disposed removably on the equalizing reservoir and closes off a filling opening of the equalizing reservoir.

EP1920965 describes a monitoring apparatus for tanks and the like, comprising detecting means to detect the filling level of a tank, detecting means to detect the opened and closed states of opening/closing means of said tank, and gathering and processing means to gather and process the detected data. The processing means are integrated with an RFID unit which can communicate said data with a remote transceiver unit.

DE202006018622 discloses a gauge having a capacitive sensor that is arranged in such a manner to be immersed into liquid in a tank and the capacitance of the sensor changes according to the level of the liquid in the tank.

The technical task underlying the present invention is thus to propose a fuel tank cap that overcomes the limits of the prior art.

This technical task is achieved by the assembly realized by the cap according to claim 1.

Further characteristics and advantages of the present invention will become more apparent from the following indicative and thus non-limiting description of a preferred, but not exclusive, embodiments of a cap of the invention, as illustrated in the appended drawings, of which:
- Figures 1-4 and 7 are sectional side views of the proposed cap, equipped with level detection devices for detecting the level of the liquid and having different configurations; and
- Figures 5 and 6 are schematic drawings of two versions of a level sensor used in the proposed cap.

With reference to the figures cited, a fuel tank cap according to the invention is indicated by the number 1.

Although the cap 1 has been especially designed to be applied to the fuel tanks of motor vehicles, it can, however, being used in any type of tank, that is, a tank not necessarily intended to contain fuel.

The proposed cap 1 includes an attachment base 2 which can be for example annular-shapep and intended to be fixed to the mouth of the tank. In detail, the cap 1 can comprise a flap 3, for example a flap hinged to the base 2, and adapted to close/open an access defined at the centre of the base 2.

Both the base 2 and the flap 3 include a relative component defined by a metal and/or plastic body, the characteristics of which will be defined in detail below.

A lock for locking/unlocking the flap 3 to/from the annular body can also be provided.

The proposed cap 1 integrates an electronic level sensor 4, 4', 6 that comprises a detection device 4 for detecting the level of liquids, which, when in use, extends in the internal volume of the tank.

In practice, this detection device 4, 4' is the sensitive element of the sensor and it can be electromechanically operated, and for example equipped with a float, or it can be electronically operated and suitable for example for detecting variations in impedance or variations of the magnetic field; furthermore, the detection device 4'can be configured to determine the level of the liquid without contact, according to procedures described herein below.

The level sensor, 4, 4', 6 can also be of the known type as such, although some advantageous optional aspects that are not found in sensors of the prior art shall be described herein below.

The sensor 4, 4', 6 includes a first electronic control unit 61 configured to transmit at the output a level signal as a function of the detection carried out by the device 4, 4'.

According to an important aspect of the invention, the cap 1 comprises a first internal seat 5 in which the first control unit 61 is housed.

As can be seen in the figures, this first seat 5 is provided in the containment body 20 of the base 2 of the cap 1. In an embodiment (not according to the invention) it can be alternatively included in the structural body 30 of the cover.

Especially in the case of application of the proposed cap 1 to a motorcycle tank, it can be envisaged that it be configured to be hands-free or keyless, in the sense already explained in the description of the prior art.

In this case, the cap 1 comprises an electronically activated lock and a second electronic control unit 7 configured to control the lock.

Advantageously, the second unit 7 is housed in a second seat 50 obtained within the body 20 of the base 2 or within the body 30 of the flap 3.

Preferably, the first and the second seat 5, 50 are distinct and, even more preferably, separate.

In the illustrated example, the first and the second seat 5, 50 are located in diametrically opposed positions in the containing body 20 of the base 2 of the cap 1.

In detail, the two seats 5, 50 can be obtained at the circumferential periphery of the base 2 of the cap 1.

In an alternative embodiment, which is not illustrated, it can be envisaged that both the first and the second control unit 61, 7 be housed in the same seat of the same containment body, that is to say that the two seats coincide.

In this case, the two processing units could be integrated to one another so as to define a single electronic control module.

According to additional different embodiments not according to the invention, one of the two units 61, 7 can be inserted in a seat obtained in the cover 3 (or flap), whereas the other unit is contained in the base 2 or they could both be contained in the cover 3.

The cap 1 can be equipped with transmission means for transmitting output signals 8 directed in particular to an external electronic control unit and said means is constituted for example by one or more cables.

Preferably, this transmission means 8 carries both said level signal and the signals transmitted by the second processing unit 7.

A plurality of embodiments of the invention characterized by possible configurations of the above-mentioned detection device 4 of the level sensor shall now be described.

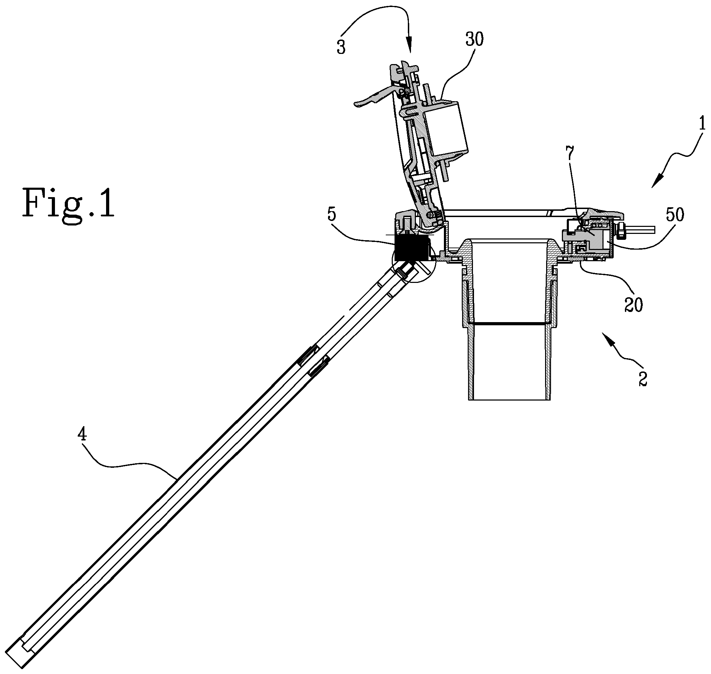

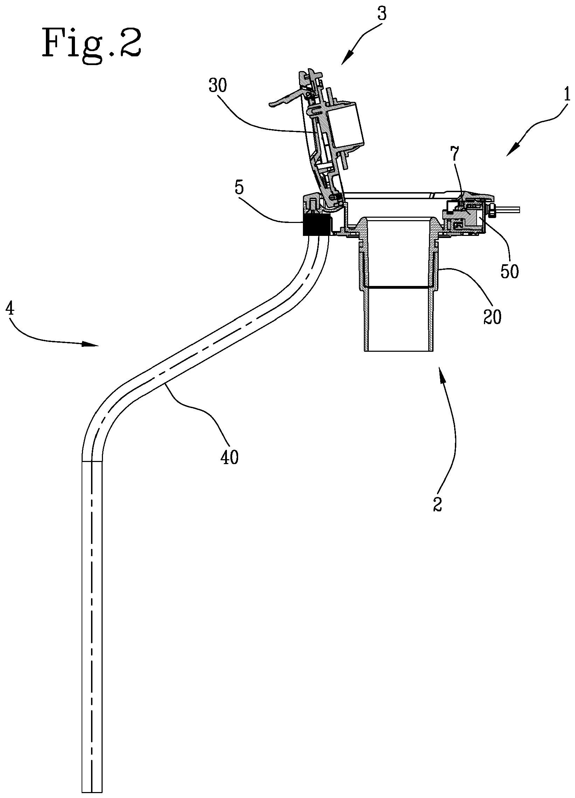

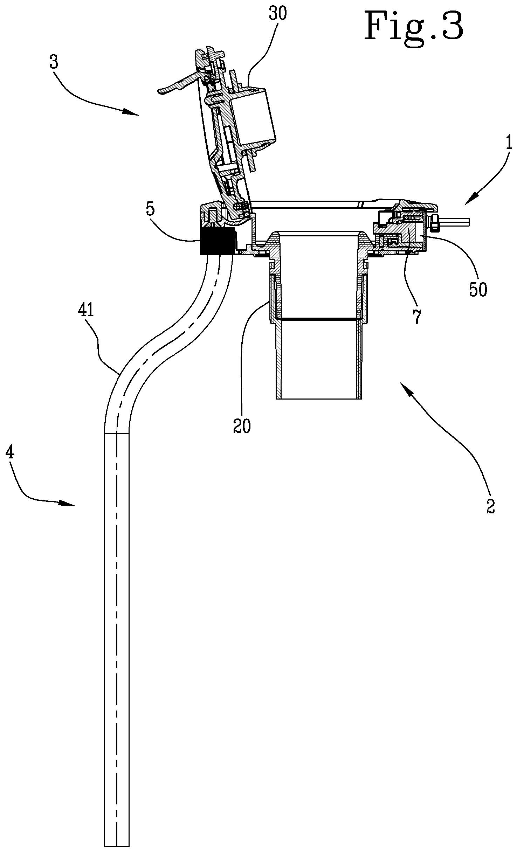

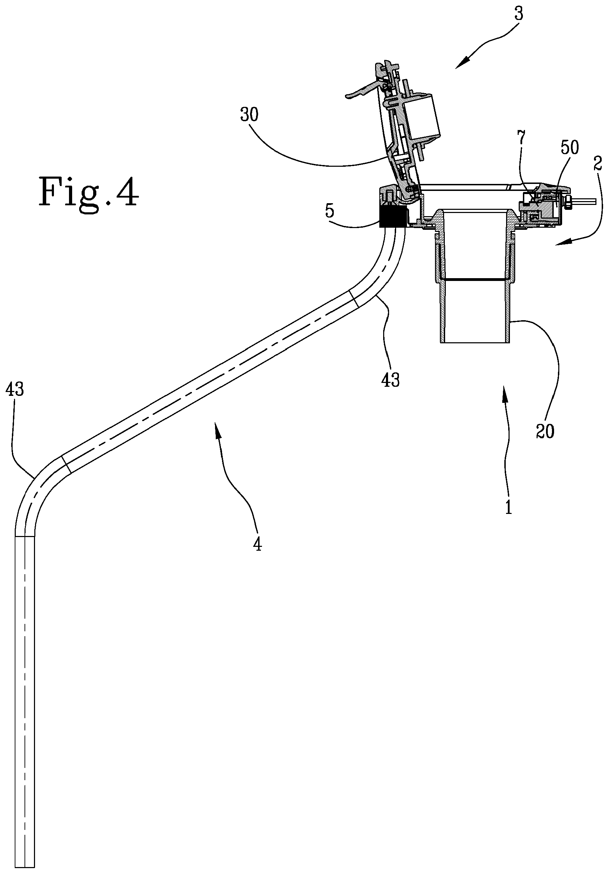

In the example shown in Figure 1, the detection device 4 is rod-shaped and rectilinear, but there can be versions, which are shown in Figures 2-4, in which the device, while remaining elongated-shaped, is, however, provided with at least one curved portion 40, 41, 42, 43.

In the case of a rectilinear device 4, the latter can be parallel to the central axis of the base 2 of the cap, that is, parallel to the direction of introduction of the liquid, or oblique with respect to this axis, as shown in Figure 1.

To be precise, the invention can envisage that the detection device 4 is formed of a plurality of sections that can be joined to one another in correspondence of at least one of the ends.

In this case, the detection device 4 is modular and it can be composed differently according to specific needs; therefore, the device is defined by many longitudinal segments, or sections, which can be straight or curved and have different curvatures and lengths.

Alternatively or additionally, the detection device 4 can be equipped with at least one flexible portion and configured to maintain the shape in which it has been brought, each time, following bending or straightening.

Furthermore, the sensor can include an upper head 6 that comprises said first processing unit 61, which is directly connected to the detection device 4.

The sensor can also include a connection module 62 connected to the first processing unit 61 and suitable for transmitting the level signal to the transmission means 8 cited above.

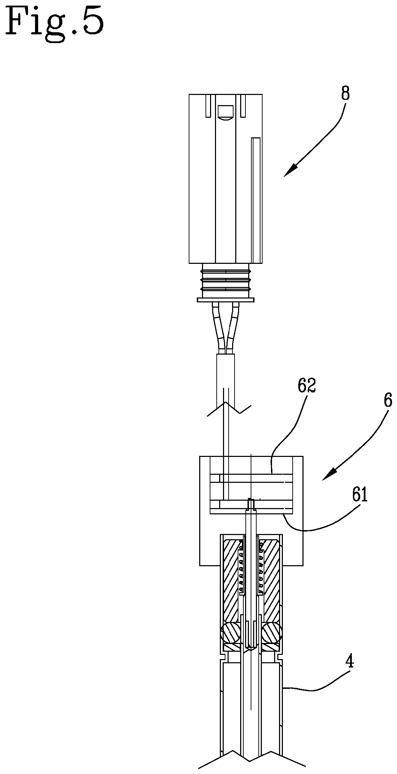

In the embodiment shown in Figure 5, the connection module 62 is included in the above-mentioned head 6 of the sensor that is placed at the first seat 5 cited above.

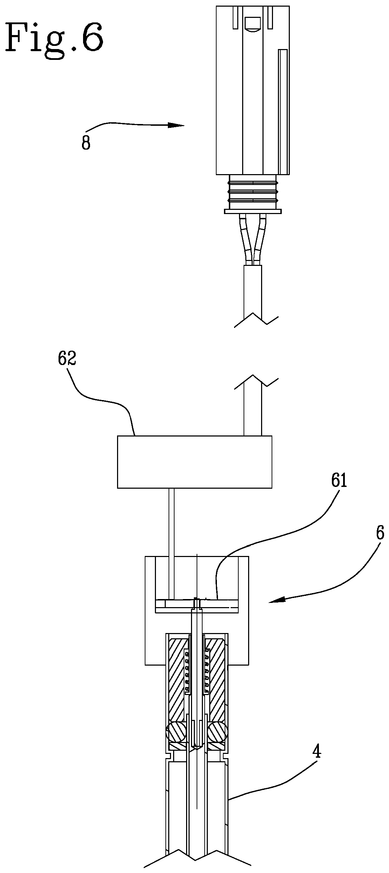

In the version shown in Figure 6, the connection module 62 is separated from the head 6 of the sensor and it is placed for example at the same connectors of the second processing unit 7, that is, the one controlling the lock for the cap 1.

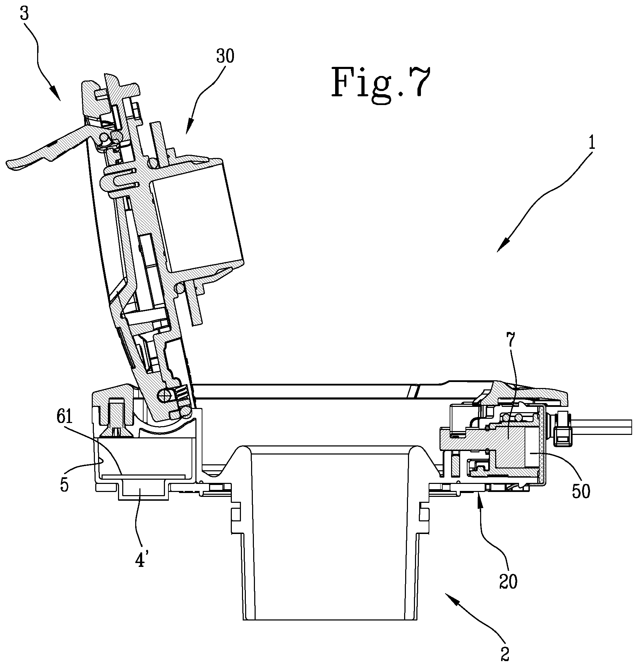

Further embodiments of the invention shall now be described with the aid of Figure 7.

These embodiments can be identical to one or more of the embodiments described previously, except for the fact that they are equipped with a detection device 4' that is suitable for detecting the level of the liquid in the tank without contact, that is, remotely.

In detail, the detection device 4' can be suitable for emitting a signal towards the surface of the liquid and for receiving the signal that is reflected by the same liquid.

In this case, the emitter/receiver of the detection device 4' faces the liquid, that is, it generally faces downwards or in any case towards the internal part of the tank to which the cap 1 is applied.

In this embodiment, the first processing unit 61 is configured to calculate the distance between the liquid and the detection device 4', as a function of the so-called "time of flight", that is, the time between the emission of the starting signal and the reception of the reflected signal, and as a function of the propagation velocity in the means in which the signal travels, which is generally the air.

The detection device 4' can be suitable for emitting and receiving an optical signal, for example of a laser or infrared or other type.

Alternatively or additionally, the detection device 4' is suitable for emitting a signal of an acoustic type, for example ultrasounds.

It is therefore clearly seen that the invention not only overcomes all of the drawbacks of the prior art concerning the encumbrance of the level sensor and the restrictions imposed on manufacturers, but it also advantageously makes it possible to adapt the shape of the detection device 4 to the geometry of the internal volume of the specific tank on which the cap 1 is applied.

## Claims

1. A tank cap (1) comprising a containment body (20) and including an electronic level sensor (4, 6) that comprises a detection device (4,4') for detecting the level of liquids and a first electronic control unit (61) configured to transmit a level signal as a function of the detection carried out by said device (4, 4'), said body (20) is comprised in an annular base (2) defining a central access and adapted to be fixed to the mouth of a tank, **characterized in that** said first control unit (61) is housed in a first seat (5) comprised in said containment body (20), the tank cap (1) further comprising a flap (3) suitable for closing said central access.

2. The tank cap (1) according to at least one of the preceding claims, wherein said detection device (4) is suitable for detecting variations in impedance and/or variations of the magnetic field.

3. The tank cap (1) according to at least one of the preceding claims, comprising an electronically activated lock and a second electronic control unit (7) configured to control said lock, housed in a second seat (50) obtained within the above-mentioned body (20).

4. The tank cap (1) according to the preceding claim, wherein the first and the second seat (5, 50) are located in diametrically opposed positions of the containing body (20).

5. The tank cap (1) according to the preceding claim, wherein the first and the second seat coincide.

6. The tank cap (1) according to at least one of claims 3 to 5, wherein the first and the second control unit are integrated with each other.

7. The tank cap (1) according to at least one of the preceding claims, wherein said detection device (4) is rod-shaped.

8. The tank cap (1) according to at least one of claims 1 - 6, wherein said detection device (4) is elongated and includes at least one curved portion (40, 41, 42, 43).

9. The tank cap (1) according to the preceding claim, wherein the detection device is formed of a plurality of sections that can be joined one an in correspondence of at least one of the ends, wherein at least one of the sections is curved.

10. The tank cap (1) according to at least one of claims 1 - 9, wherein the detection device is flexible.

11. The tank cap (1) according to claim 1, wherein the detection device (4') is suitable for detecting the level of a liquid without contact with the latter.

12. The tank cap (1) according to the preceding claim, wherein the detection device (4') is suitable for emitting a signal and for receiving a signal reflected by said liquid.

13. The tank cap (1) according to the preceding claim, wherein the detection device (4') is suitable for emitting and receiving a signal of an optical type.

14. The tank cap (1) according to claim 12, wherein the detection device (4') is suitable for emitting and receiving a signal of the acoustic type.

## Patentansprüche

1. Tankdeckel (1) umfassend einen Aufnahmekörper (20) und einschließend einen elektronischen Füllstandssensor (4, 6), der eine Erfassungsvorrichtung (4, 4') zum Erfassen des Flüssigkeitsstands umfasst und eine erste elektronische Steuereinheit (61), die konfiguriert ist, um ein Füllstandssignal in Abhängigkeit von der von der Vorrichtung (4, 4') durchgeführten Erfassung zu übertragen, wobei der Körper (20) in einer ringförmigen Basis (2) enthalten ist, die einen zentralen Zugang definiert und am Mund eines Tanks befestigt werden kann, **dadurch gekennzeichnet, dass** die erste Steuereinheit (61) in einem ersten Sitz (5) untergebracht ist, der im Aufnahmekörper (20) enthalten ist, wobei der Tankdeckel (1) ferner eine Klappe (3) umfasst, die zum Schließen des zentralen Zugangs ausgelegt ist.

2. Tankdeckel (1) nach mindestens einem der vorhergehenden Ansprüche, wobei die Erfassungsvorrichtung (4) ausgelegt ist, um Impedanzänderungen und/oder Änderungen des Magnetfelds zu erfassen.

3. Tankdeckel (1) nach mindestens einem der vorhergehenden Ansprüche, umfassend ein elektronisch aktiviertes Schloss und eine zweite elektronische Steuereinheit (7), die konfiguriert ist, um das Schloss zu steuern, die in einem zweiten Sitz (50) untergebracht ist, der innerhalb des oben genannten Körpers (20) ausgebildet ist.

4. Tankdeckel (1) nach dem vorhergehenden Anspruch, wobei der erste und der zweite Sitz (5, 50) in diametral gegenüberliegenden Positionen des Aufnahmekörpers (20) angeordnet sind.

5. Tankdeckel (1) nach dem vorhergehenden Anspruch, wobei der erste und der zweite Sitz zusammenfallen.

6. Tankdeckel (1) nach mindestens einem der Ansprüche 3 bis 5, wobei die erste und die zweite Steuereinheit miteinander integriert sind.

7. Tankdeckel (1) nach mindestens einem der vorhergehenden Ansprüche, wobei die Erfassungsvorrichtung (4) stabförmig ist.

8. Tankdeckel (1) nach mindestens einem der Ansprüche 1 bis 6, wobei die Erfassungsvorrichtung (4) langgestreckt ist und mindestens einen gekrümmten Abschnitt (40, 41, 42, 43) umfasst.

9. Tankdeckel (1) nach dem vorhergehenden Anspruch, wobei die Erfassungsvorrichtung aus einer Vielzahl an Abschnitten gebildet ist, die an mindestens einem der Enden miteinander verbunden werden können, wobei mindestens einer der Abschnitte gekrümmt ist.

10. Tankdeckel (1) nach mindestens einem der Ansprüche 1 bis 9, wobei die Erfassungsvorrichtung (4) flexibel ist.

11. Tankdeckel (1) nach Anspruch 1, wobei die Erfassungsvorrichtung (4') ausgelegt ist, um den Füllstand einer Flüssigkeit ohne Kontakt mit dieser zu erfassen.

12. Tankdeckel (1) nach dem vorhergehenden Anspruch, wobei die Erfassungsvorrichtung (4') ausgelegt ist, um ein Signal auszusenden und ein von der Flüssigkeit reflektiertes Signal zu empfangen.

13. Tankdeckel (1) nach dem vorhergehenden Anspruch, wobei die Erfassungsvorrichtung (4') ausgelegt ist, um ein optisches Signal auszusenden und zu empfangen.

14. Tankdeckel (1) nach Anspruch 12, wobei die Erfassungsvorrichtung (4') ausgelegt ist, um ein akustisches Signal auszusenden und zu empfangen.

## Revendications

1. Bouchon de réservoir (1) comprenant un corps de contenance (20) et incluant un capteur de niveau électronique (4, 6) comprenant un dispositif de détection (4, 4') servant à détecter le niveau des liquides et une première unité de commande électronique (61) configurée pour transmettre un signal de niveau en fonction de la détection effectuée par ledit dispositif (4, 4'), ledit corps (20) est compris dans une base annulaire (2) définissant un accès central et adapté pour être fixé à l'embouchure d'un réservoir, **caractérisé en ce que** ladite première unité de commande (61) est logée dans un premier siège (5) compris dans ledit corps de contenance (20), le bouchon de réservoir (1) comprenant de plus un volet (3) approprié pour fermer ledit accès central.

2. Bouchon de réservoir (1) selon au moins une des revendications précédentes, dans lequel ledit dispositif de détection (4) est adapté pour détecter des variations d'impédance et/ou des variations du champ magnétique.

3. Bouchon de réservoir (1) selon au moins une des revendications précédentes, comprenant un verrou activé électroniquement et une deuxième unité de commande électronique (7), configurée pour commander ledit verrou, logée dans un deuxième siège (50) obtenu à l'intérieur du corps (20) susmentionné.

4. Bouchon de réservoir (1) selon la revendication précédente, dans lequel le premier et le second siège (5, 50) sont situés dans des positions diamétralement opposées du corps de contenance (20).

5. Bouchon de réservoir (1) selon la revendication précédente, dans lequel le premier et le second siège coïncident.

6. Bouchon de réservoir (1) selon au moins une des revendications 3 à 5, dans lequel la première et la deuxième unité de commande sont intégrées l'une à l'autre.

7. Bouchon de réservoir (1) selon au moins une des revendications précédentes, dans lequel ledit dispositif de détection (4) est en forme de tige.

8. Bouchon de réservoir (1) selon au moins une des revendications 1 - 6, dans lequel ledit dispositif de détection (4) est allongé et inclut au moins une partie incurvée (40, 41, 42, 43).

9. Bouchon de réservoir (1) selon la revendication précédente, dans lequel le dispositif de détection est formé d'une pluralité de sections qui peuvent être jointes l'une à l'autre en correspondance avec au moins une des extrémités, dans lequel au moins une des sections est incurvée.

10. Bouchon de réservoir (1) selon au moins une des revendications 1 - 9, dans lequel le dispositif de détection est flexible.

11. Bouchon de réservoir (1) selon la revendication 1, dans lequel le dispositif de détection (4') est adapté pour détecter le niveau d'un liquide sans contact avec ce dernier.

12. Bouchon de réservoir (1) selon la revendication précédente, dans lequel le dispositif de détection (4') est adapté pour émettre un signal et pour recevoir un signal réfléchi par ledit liquide.

13. Bouchon de réservoir (1) selon la revendication précédente, dans lequel le dispositif de détection (4') est adapté pour émettre et recevoir un signal de type optique.

14. Bouchon de réservoir (1) selon la revendication 12, dans lequel le dispositif de détection (4') est adapté pour émettre et recevoir un signal de type acoustique.
